# EUROPÄISCHE PATENTSCHRIFT

(11) **EP 0 571 850 B1**
(45) Veröffentlichungstag und Bekanntmachung des Hinweises auf die Patenterteilung: **06.03.1996**
(21) Anmeldenummer: 93107953.7
(22) Anmeldetag: 15.05.1993
(51) Int. Cl.: F16K 31/126, F16K 7/17

(54) **Membranventil**
Diaphragm valve
Vanne à membrane

(30) Priorität: 28.05.1992 DE 9207226 U
(43) Veröffentlichungstag der Anmeldung: 01.12.1993
(73) Patentinhaber: J. Lorch Ges. & Co. KG, D-71111 Waldenbuch (DE)
(72) Erfinder: Küther, Ludwig, W-7022 LE-Echterdingen (DE)
(74) Vertreter: Dreiss, Hosenthien, Fuhlendorf & Partner

(56) Entgegenhaltungen:
- DE-A- 1 803 166
- US-A- 2 270 037
- US-A- 2 678 662
- US-A- 3 175 473
- US-A- 3 180 235
- US-A- 3 884 446

## Beschreibung

Die Erfindung betrifft ein pneumatisch oder hydraulisch angetriebenes Membranventil mit einem durch einen Ventilkörper absperrbaren Durchgangskanal bei dem der Ventilkörper über eine Koppelstange durch eine Antriebseinheit um den Ventilhub zwischen seiner "Zu-Lage" und seiner "Auf-Lage" bringbar ist, wobei zur Hubbegrenzung des Ventilkörpers ein ventilkörperverbundener Anschlag an einem gehäusefesten Anschlag anliegt, wobei die wirksame Länge der die Antriebseinheit mit dem Ventilkörper verbindenden Koppelstange veränderbar ist und dabei mindestens die "Auf-Lage" des Ventilkörpers durch einen festen Anschlag und die eingestellte wirksame Länge der Koppelstange vorgegeben ist und im Bereich der "Zu-Lage" des Ventilkörpers ein weiteres Anschlagpaar vorgesehen ist, wobei der Anschlag mit dem Ventilkörper verbunden und der andere Anschlag am Gehäuse vorgesehen ist, und beim Aneinanderliegen dieser Anschläge der Schließhub des Ventilkörpers begrenzt ist. Bei einem solchen aus der US-PS 2,270,037 bekannten Ventil, dient die verstellbare Länge der Koppelstange dazu, daß in einer Stellung der Schieber zwischen einer oberen Lage und seiner Schließlage verschiebbar ist und in einer anderen Stellung zwischen einer unteren Lage und einer Schließlage. Mit einem solchen Ventil kann bei Schließlage noch vorhandener Mindestdurchflußquerschnitt eingestellt werden, um so Beispiel für ein Meßgerät o.dgl. eine Mindestflüssigkeitsversorgung sicherzustellen.

Aus der DE-A-1 803 166 ist weiter ein Membranventil bekannt, bei dem über eine drehbar angeordnete Koppelstange die Ventilfedervorspannung eingestellt werden kann.

Aufgabe der vorliegenden Erfindung ist es, ein eingangs beschriebenes Membranventil so auszubilden, daß es als normales Membranventil eingesetzt werden kann, daß aber eine Einstellmöglichkeit vorgesehen ist, durch die in geschlossenem Zustand des Ventils ein Mindestdurchflußquerschnitt frei bleibt.

Zur Lösung dieser Aufgabe sieht die Erfindung vor, daß durch das weitere Anschlagpaar ein von der eingestellten wirksamen Länge der Koppelstange abhängiger Mindestdurchflußquerschnitt des Ventils offen ist und bei größerer eingestellter wirksamer Länge der Koppelstang in "Zu-Lage" der Antriebseinheit der Ventilkörper auf seinen Sitz gepreßt ist und dabei die weiteren Anschläge nicht zur Anlage kommen.

Durch diese durch die Anschlagordnung gegebene weitere Einstellmöglichkeit, kann ein Mindestdurchfluß durch das Ventil sichergestellt werden. Damit ist ein solches Ventil wesentlich vielseitiger einsetzbar.

Zweckmäßigerweise kann bei einem Ventil, bei dem die Antriebseinheit zwischen einem Oberteil und einem Unterteil des Gehäuses angeordnet ist, am Hubteil der Antriebseinheit ventilseitig der ventilkörpergebundene weitere Anschlag und auf der von der Koppelstange durchragten Oberseite des Unterteils des Gehäuses der gehäusefest weitere Anschlag des weiteren Anschlagpaars vorgesehen sein.

Um die auftretenden Kräfte beim raschen Öffnen des Ventils sicher abzufangen, können im Oberteil des Gehäuses am Umfang verteilt mehrere Vorsprünge vorgesehen sein, die zusammen den gehäusefesten Anschlag abgeben, wobei die Vorsprünge vorzugsweise als radial verlaufende Rippen ausgebildet sind, die zugleich als seitliche Führung für die Ventilfeder oder das Ventilfederpaket dienen können. Dabei können die gehäusefesten Anschläge mit dem den Ventilkörper verbundenen Anschlag abgebenden umlaufenden Rand eines Federtellers zusammenwirken.

Konstruktiv besonders einfach kann bei einem Membranventil mit einer von der Koppelstange durchdrungenen weiteren Membran diese Koppelstange ein mit einer Buchse zusammenwirkendes Gewinde aufweisen, wobei die Koppelstange drehbar mit dem Ventilkörper verbunden ist.

Hierdurch ist eine Hubeinstellung des Membranventils durch einfaches Verdrehen der Koppelstange möglich. Besonders vorteilhaft ist, daß durch die Durchführung der Koppelstange durch die Buchse hindurch eine Notverstellung, insbesondere ein Notöffnen des Ventils ermöglicht wird ohne daß die Feder weiter vorgespannt werden muß, die Verstellung also ohne Änderung der Vorspannung der Feder bzw. des Federpakets besonders leichtgängig ermöglicht wird.

Konstruktiv besonders einfach kann die Buchse die weitere Membran durchragen und einen Federteller für die Feder bzw. Federn tragen, wobei zur Vereinfachung der Montage diese Teile als vormontierte Gruppe leicht automatisch montierbar sind.

Zweckmäßigerweise kann die der Feder gegenüberliegende Seite des Federtellers als Abstutzfläche für die weitere Membran dienen, wobei Buchse und Federteller ggf. auch einstückig gewichtssparend ausgebildet sein können.

Zur Bedienungsvereinfachung kann das freie Ende der Koppelstange durch den gehäusefesten Anschlag hindurch nach außen geführt sein und es können an diesem freien Ende Mittel für den Ansatz eines Drehwerkzeugs vorgesehen sein, bspw. Schlüsselflächen, Vielkantflächen o.dgl. Weiter kann die Koppelstange mit einer durch ein Drehmoment überwindbaren Drehsicherung gegen unerwünschtes Verstellen drehgesichert sein bspw. durch eine einfache Federraste.

Weiter kann besonders vorteilhaft das nach außen geführte Ende der Koppelstange als optische Stellungsanzeige dienen und dazu durch eine Sichtglocke abgedeckt sein, wobei die Sichtglocke zur Hubeinstellung leicht abnehmbar am Ventilgehäuse gehalten sein kann.

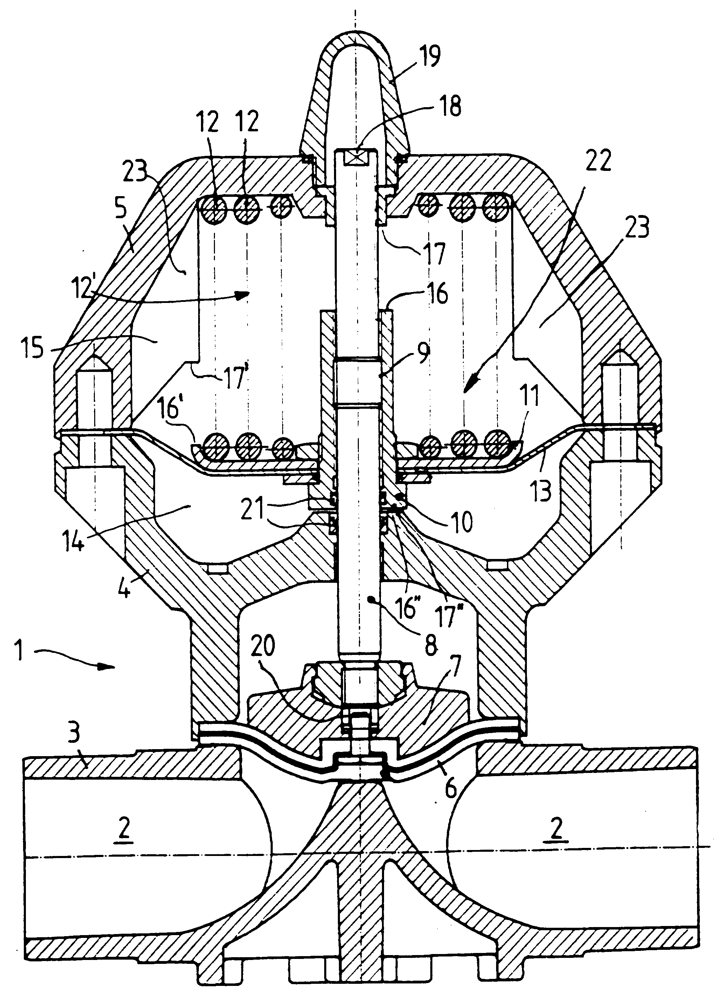

Weitere erfindungsgemäße Ausbildungen sind den Unteransprüchen zu entnehmen und werden mit ihren Vorteilen anhand der beigefügten einzigen Zeichnung eines Ausführungsbeispiels in Form eines Membranventils näher erläutert.

Das Ventilgehäuse 1 des dargestellten Membranventils besteht aus drei Teilen, nämlich aus einem einen Durchgangskanal 2 aufweisenden Hauptteil 3, einem darauf aufgesetzten Unterteil 4 und einem Oberteil 5, die jeweils über nicht näher dargestellte Schrauben miteinander dicht verschraubt sind.

Der Durchgangskanal 2 des Hauptteils 3 ist über einen eine Membran 6 aufweisenden Ventilkörper 7 absperrbar.

Der Ventilkörper 7 wird von einer Koppelstange 8 getragen, die den Unterteil 4 und auch den Oberteil 5 durchragt und darin verschiebbar geführt ist.

Zwischen Unterteil 4 und Oberteil 5 des Gehäuses 1 ist eine Antriebseinheit 22 vorgesehen, die über die Koppelstange 8 mit dem Ventilkörper 7 verbunden ist.

Die Koppelstange 8 wirkt über ein Gewinde 9 mit einer Buchse 10 zusammen, die zwischen dem Unterteil 4 und dem Oberteil 5 des Ventilgehäuses angeordnet ist und die weiter einen Federteller 11 trägt, der einerseits mit einem aus mehreren Federn 12 zusammengesetzten Federpaket 12' und andererseits mit einer weiteren Membran 13 zusammenwirkt, durch die der Hohlraum zwischen Unterteil 4 und Oberteil 5 in einen Druckraum 14 und einen Federraum 15 für das Federpaket 12' unterteilt wird.

Das Federpaket 12' ist vorgespannt, so daß über den Federteller 11 und die Koppelstange 8 der Ventilkörper 7 nach unten gedrückt und so der Durchgangskanal 2 abgesperrt ist. Wird nun dem Druckraum 14 ein Druckmedium, z.B. Druckluft oder Hydrauliköl, zugeführt, so wird entgegen der Federkraft über die Membran 13 der Federteller 11 mit der Buchse 10 und damit auch die Koppelstange 8 mit dem Ventilkörper 7 und der Membran 6 nach oben verschoben und so der Durchgangskanal 2 geöffnet. Der Ventilhub wird durch einen Anschlag 16 der Buchse 10 einerseits und einen Anschlag 17 im Inneren des Oberteils 5 des Ventilgehäuses 1 andererseits begrenzt. Eine weitere Möglichkeit der Hubbegrenzung insbesondere bei größeren auftretenden Kräften besteht darin, daß im Oberteil am Umfang innen verteilt Rippen 23 angeordnet sind, die Anschläge 17' bildende Absätze aufweisen. Die Seitenkanten der Rippen 23 können gleichzeitig zur Führung des Federpakets 12' dienen. Der umlaufende Rand des Federtellers 11 dient dann als Ventilkörper verbundener Anschlag 16' zur Ventilhubbegrenzung mit den Anschlägen 17' zusammen. Bei dieser Konstruktionsvariante muß dann die Buchse 10 etwas kürzer ausgeführt werden, daß sichergestellt ist, daß nur die Anschläge 16', 17' zur Anlage kommen und nicht die weiter oben beschriebenen als Anschläge 16, 17 dienenden Flächen.

Der Ventilhub kann durch Drehen der Koppelstange 8 über das Gewinde 9 von außen eingestellt werden. Hierzu ist das freie Ende der Koppelstange 8 mit einem Mittel 18 für den Ansatz eines nicht dargestellten Einstellwerkzeugs versehen. Hierzu können z.B. Schlüsselflächen in Form von Sechskantflächen, Innensechskantfläche o.dgl. vorgesehen sein.

Desweiteren kann das untere Ende der Buchse 10 als Anschlag 16'' dienen, der mit einer als Gegenanschlag 17'' dienenden Ringfläche auf der inneren Oberseite des Unterteils 2 zusammenwirken kann. Die Abmessungen sind dabei so auszulegen, daß bei normal eingestellter wirksamer Länge der Koppelstange 8 in deren "Zu-Lage" der Ventilkörper 7 auf seinem Ventilsitz im Hauptteil 3 aufsitzt und den Durchgangskanal 2 schließt. Es ist dann noch ein gewisser Mindestabstand zwischen den Anschlägen 16'' und 17'' vorhanden. Erfolgt eine Verkürzung der wirksamen Länge der Koppelstange 8, so kommen in der "Zu-Stellung" der Antriebseinheit 22 die Anschläge 16'', 17'' zur Anlage und es kann der Ventilkörper 7 nicht mehr bis zu seinem dicht schließenden Sitz eintauchen, so daß ein Mindestdurchflußquerschnitt bei "geschlossenem Ventil" offen bleibt. Mit einer einzigen Einstellmöglichkeit kann bei einem derart ausgebildeten Ventil ein Mindestdurchfluß eingestellt oder der maximale Ventilhub und dann die maximale Durchflußmenge in einfacher Weise begrenzt werden.

Das die Mittel 18 tragende, den Oberteil 5 durchragende Ende der Koppelstange 8 dient als Stellungsanzeige für die Lage des Ventilskörpers 7 und kann zur besseren Sichtbarkeit entsprechend farbig markiert sein. Das Eindringen von Schmutz kann durch eine Sichtglocke 19 verhindert werden, die zur Erleichterung der Hubeinstellung leicht abnehmbar am Oberteil 5 befestigt ist, wobei ausreichend Freiraum für das Ende der Koppelstange 8 in geöffnetem Ventilzustand vorgesehen ist.

Die Koppelstange 8 ist drehbar im Ventilkörper 7 gehalten und es kann dort eine nur angedeutete Drehsicherung 20 vorgesehen sein, durch die ein unbeabsichtigtes Verstellen der Hubbegrenzung (Anschläge 16,17) verhindert wird. Die Drehsicherung 20 kann bspw. eine in Rastausnehmungen einschnappende Federsicherung sein. Es kann aber auch irgendeine andere der bekannten durch Drehmoment überwindbaren Drehsicherungen Anwendung finden.

Dadurch wird eine einfache und schnell bedienbare Nothandbetätigung ermöglicht, bei der das Federpaket 12' in seiner Vorspannung nicht verändert werden muß. Die Nothandbetätigung ist daher besonders leichtgängig.

Um Leckverluste möglichst gering zu halten, sind zwischen der Koppelstange 8, dem Unterteil 4 und der Buchse 10 Dichtungen 21 vorgesehen, vorzugsweise Rundschnurdichtungen.

## Patentansprüche

1. Pneumatisch oder hydraulisch angetriebenes Membranventil mit einem durch einen Ventilkörper (7) absperrbaren Durchgangskanal (2) bei dem der Ventilkörper (7) über eine Koppelstange (8) durch eine Antriebseinheit (22) um den Ventilhub zwischen seiner "Zu-Lage" und seiner "Auf-Lage" bringbar ist, wobei zur Hubbegrenzung des Ventilkörpers (7) ein ventilkörperverbundener Anschlag (16,16') an einem gehäusefesten Anschlag (17,17') anliegt, wobei die wirksame Länge der die Antriebseinheit (22) mit dem Ventilkörper (7) verbindenden Koppelstange (8) veränderbar ist und dabei mindestens die "Auf-Lage" des Ventilkörpers (7) durch einen festen Anschlag (17,17') und die eingestellte wirksame Länge der Koppelstange (8) vorgegeben ist und im Bereich der "Zu-Lage" des Ventilkörpers (7) ein weiteres Anschlagpaar (16",17") vorgesehen ist, wobei der Anschlag (16") mit dem Ventilkörper (7) verbunden und der andere Anschlag (17") am Gehäuse (1) vorgesehen ist, und beim Aneinanderliegen dieser Anschläge (16",17") der Schließhub des Ventilkörpers (7) begrenzt ist, **dadurch gekennzeichnet**, daß durch das weitere Anschlagpaar (16",17") ein von der eingestellten wirksamen Länge der Koppelstange (8) abhängiger Mindestdurchflußquerschnitt des Ventils offen ist und bei größerer eingestellter wirksamer Länge der Koppelstange (8) in "Zu-Lage" der Antriebseinheit (22) der Ventilkörper (7) auf seinen Sitz gepreßt ist und dabei die weiteren Anschläge (16",17") nicht zur Anlage kommen.

2. Membranventil nach Anspruch 1 bei dem die Antriebseinheit (22) zwischen einem Oberteil (5) und einem Unterteil (4) des Gehäuses (1) angeordnet ist, dadurch gekennzeichnet, daß am Hubteil (Buchse 10) der Antriebseinheit (22) ventilseitig der ventilkörperverbundene weitere Anschlag (16") und auf der von der Koppelstange (8) durchragten Oberseite des Unterteils (4) des Gehäuses (1) der gehäusefeste weitere Anschlag (17") des weiteren Anschlagpaars (16",17") vorgesehen sind.

3. Membranventil nach Anspruch 1, dadurch gekennzeichnet, daß im Oberteil (5) des Gehäuses (1) am Umfang verteilt mehrere Vorsprünge vorgesehen sind, die zusammen den gehäusefesten Anschlag (17') abgeben, wobei die Vorsprünge vorzugsweise als radial verlaufende Rippen (23) ausgebildet sind.

4. Membranventil nach Anspruch 3, dadurch gekennzeichnet, daß die gehäusefesten Anschläge (17') mit dem den Ventilkörper verbundenen Anschlag (16') abgebenden umlaufenden Rand des Federtellers (11) zusammenwirken.

5. Membranventil nach einem der Ansprüche 1 bis 4 mit einer von der Koppelstange (8) durchdrungenen weiteren Membran (13), dadurch gekennzeichnet, daß die Koppelstange (8) ein mit einer Buchse (10) zusammenwirkendes Gewinde (9) aufweist, das die Koppelstange (8) ferner drehbar mit dem Ventilkörper verbunden ist.

6. Membranventil nach Anspruch 5, dadurch gekennzeichnet, daß die Buchse (10) die weitere Membran (13) durchragt und einen Federteller (11) für die vorgespannte Feder (12) bzw. Federn (12) trägt und daß die der Feder (12) bzw. den Federn (12') gegenüberliegende Seite des Federtellers (11) als Abstützfläche für die weitere Membran (13) dient.

7. Membranventil nach einem der Ansprüche 1 bis 6, dadurch gekennzeichnet, daß das freie Ende der Antriebsstange (8) nach außen geführt ist und dieses freie Ende mit Mitteln (18) für den Ansatz eines Drehwerkzeugs versehen ist und daß die Antriebsstange (8) mit einer durch ein Drehmoment überwindbaren Drehsicherung (20) gegen unerwünschtes Verstellen gesichert ist.

8. Membranventil nach Anspruch 7, dadurch gekennzeichnet, daß das nach außen geführte Ende der Koppelstange (8) durch eine Sichtglocke (19) abgedeckt ist und die Sichtglocke (19) zur Hubverstellung und Nothandbetätigung leicht abnehmbar am Ventilgehäuse (1) gehalten ist.

## Claims

1. Pneumatically or hydraulically actuated diaphragm valve with a passageway (2) that can be closed by means of a valve gate (7) in which the valve lift between the "closed" and the "open" position of the valve gate (7) is controlled by a drive mechanism (22) via a connecting rod (8), the valve lift of the valve gate limited by a stop (16, 16') connected to the valve gate (7) and fitting close to a stop (17, 17') rigidly fitted within the valve box, where the effective length of the drive mechanism (22) can be adjusted by means of the connecting rod (8) linking the driving mechanism (22) to the valve gate and where at least the "open" position of valve gate (7) is limited by a rigid stop (17, 17') and by the effective length of the connecting rod (8), a further pair of stops (16", 17") being provided within the area of the "closed" position of the valve gate (7) the stop (16") being connected with the valve gate (7) whereas another stop (17") is fitted within the valve box (1) so that the closing lift of the valve gate (7) is limited when these two stops (16", 17") are in contact with one another, characterized by the feature that the additional pair of stops (16", 17") has the effect of leaving a minimum opening area of the valve, depending on the effective length of the connecting rod (8), so that valve gate (7) is pressed onto its seat when the connecting rod (8) is adjusted to an increased effective length and the additional stops (16", 17") will not contact each other.

2. Diaphragm valve as per claim 1 in which the driving mechanism (22) is arranged between upper section (5) and a lower section (4), characterized by the feature that the additional stop (16"), which is connected to the valve gate, is provided at the lifting section (bush 10) at the side of the valve and that on the upper part of the lower section of the body (1), transversed by the connection rod (8), the other stop (17") of the stop pair (16", 17") is firmly installed within the body.

3. Diaphragm valve as per claim 1, characterized by the feature that several projecting parts are spread over the circumference of the upper section (5) of the body (1), as a whole forming the stop (17') firmly installed within the body, the projecting parts preferentially shaped as radially running fins (23).

4. Diaphragm valve as per claim 3, characterized by the feature that the stops (17'), which are firmly installed in the body, conspire with the edge of the orbiting spring plate (11) forming the stop (16') connected to the valve gate.

5. Diaphragm valve as per claims 1 to 4, comprising a further diaphragm (13) transversed by the connecting rod (8), characterized by the feature that the connecting rod (8) is provided with a thread (9) conspiring with a bush (10) and that the connecting rod (8) is in addition rotatably connected with the valve gate.

6. Diaphragm valve as per claim 5, characterized by the feature that the bush (10) traverses the additional diaphragm (13) and supports a spring plate (11) for the pretensioned spring (12), or springs (12), and that the side of the spring plate (11) positioned opposite to the spring(12), or springs (12), serves as supporting surface for the additional diaphragm (13).

7. Diaphragm valve as per the aforementioned claims nos. 1 through 6, characterized by the feature that the free end of the connecting rod (8) is guided to the outside and that this free end is provided with means (18) permitting the application of a turning tool and that the connecting rod (8) is secured against undesired adjustment by means of a safety device which can be overcome by the twisting moment.

8. Diaphragm valve as per claim 7, characterized by the feature that the end of the connecting rod (8), which is guided towards the outside, is covered by a transparent inspection cap (19) and that the inspection cap (19) is fitted at the valve box (1) allowing easy removal to permit adjustment of the valve lift.

## Revendications

1. Vanne à membrane, à entraînement pneumatique ou hydraulique, avec un canal de passage (2) pouvant être fermé par un corps de vanne (7), selon laquelle le corps de vanne (7) peut être déplacé par une unité d'entraînement (22) du montant de la course de vanne entre sa "position fermée" et sa "position ouverte", une butée (16, 16') reliée au corps de vanne s'appliquant contre une butée (17, 17') solidaire du boîtier afin de limiter la course du corps de vanne (7), la longueur active de la tige d'accouplement (8) reliant l'unité d'entraînement (22) au corps de vanne (7) pouvant être modifiée et au moins la "position ouverte" du corps de vanne (7) étant alors prédéfinie par une butée fixe (17, 17') et par la longueur active réglée de la tige d'accouplement (8), et une paire supplémentaire de butées (16", 17") étant prévue au voisinage de la "position fermée" du corps de vanne (7), la butée (16") étant reliée au corps de vanne (7) et l'autre butée (17") étant prévue sur le boîtier (1), et la course de fermeture du corps de vanne (7) étant limitée lors de l'application de ces butées (16", 17") l'une contre l'autre, caractérisée en ce qu'une section minimale de passage de la vanne, dépendante de la longueur active réglée de la tige d'accouplement (8), est ouverte par la paire supplémentaire de butées (16", 17") et, lorsque la longueur active de la tige d'accouplement (8) est réglée à une plus grande valeur, le corps de vanne (7) est pressé sur son siège dans la "position fermée" de l'unité d'entraînement (22) et les butées supplémentaires (16", 17") n'entrent alors pas en application mutuelle.

2. Vanne à membrane selon la revendication 1, dans laquelle l'unité d'entraînement (22) est disposée entre une partie supérieure (5) et une partie inférieure (4) du boîtier (1), caractérisée en ce que la butée supplémentaire (16"), reliée au corps de vanne, est prévue côté vanne sur l'élément de translation (douille 10) de l'unité d'entraînement (22), et l'autre butée (17"), solidaire du boîtier, de la paire supplémentaire de butées (16", 17"), est prévue sur la face supérieure, traversée par la tige d'accouplement (8), de la partie inférieure (4) du boîtier (1).

3. Vanne à membrane selon la revendication 1, caractérisée en ce que plusieurs saillies sont prévues, en étant régulièrement réparties sur la périphérie, dans la partie supérieure (5) du boîtier (1), lesquelles saillies forment conjointement la butée (17') solidaire du boîtier, ces saillies étant de préférence réalisées sous la forme de nervures (23) s'étendant radialement.

4. Vanne à membrane selon la revendication 3, caractérisée en ce que les butées (17') solidaires du boîtier coopèrent avec le bord périphérique de la coupelle de ressort (11), lequel bord forme la butée (16') reliée au corps de vanne.

5. Vanne à membrane selon l'une quelconque des revendications 1 à 4, avec une membrane supplémentaire (13) traversée par la tige d'accouplement (8), caractérisée en ce que la tige d'accouplement (8) présente un filetage (9) coopérant avec une douille (10), la tige d'accouplement (8) étant en outre solidaire en rotation du corps de vanne.

6. Vanne à membrane selon la revendication 5, caractérisée en ce que la douille (10) traverse la membrane supplémentaire (13) et porte une coupelle de ressort (11) pour le ou les ressorts précontraints (12), et en ce que la face de la coupelle de ressort (11) qui est opposée au ressort (12) ou, selon le cas, aux ressorts (12'), sert de face d'appui pour la membrane supplémentaire (13).

7. Vanne à membrane selon l'une quelconque des revendications 1 à 6, caractérisée en ce que l'extrémité libre de la tige d'accouplement (8) est amenée à l'extérieur, et cette extrémité libre est pourvue de moyens (18) pour l'application d'un outil rotatif, et en ce que la tige d'accouplement (8) est protégée d'un mouvement intempestif par un blocage en rotation (20) pouvant être surmonté par un certain couple de rotation.

8. Vanne à membrane selon la revendication 7, caractérisée en ce que l'extrémité de la tige d'accouplement (8) qui est amenée à l'extérieur est recouverte par une cloche transparente (19), et cette cloche transparente (19) est maintenue sur le boîtier de vanne (1) de façon aisément amovible en vue du réglage de la course ou d'un actionnement manuel d'urgence.
